(19) Europäisches Patentamt
European Patent Office
Office européen des brevets

(11) Veröffentlichungsnummer: **0 387 579 B1**

(12) **EUROPÄISCHE PATENTSCHRIFT**

(45) Veröffentlichungstag der Patentschrift: **18.11.93**

(51) Int. Cl.⁵: **C09B 62/01**, D06P 3/66, D06P 3/10

(21) Anmeldenummer: **90103670.7**

(22) Anmeldetag: **26.02.90**

# (54) Verdoppelte Reaktivfarbstoffe.

(30) Priorität: **13.03.89 DE 3908073**

(43) Veröffentlichungstag der Anmeldung:
**19.09.90 Patentblatt 90/38**

(45) Bekanntmachung des Hinweises auf die Patenterteilung:
**18.11.93 Patentblatt 93/46**

(84) Benannte Vertragsstaaten:
**CH DE FR GB IT LI**

(56) Entgegenhaltungen:
**DE-A- 3 135 432**
**DE-A- 3 636 398**
**US-A- 4 670 547**

(73) Patentinhaber: **BASF Aktiengesellschaft**
**Carl-Bosch-Strasse 38**
**D-67063 Ludwigshafen(DE)**

(72) Erfinder: **Loeffler, Hermann**
**Haydnstrasse 23**
**D-6720 Speyer(DE)**
Erfinder: **Pandl, Klaus, Dr.**
**Schumannstrasse 18**
**D-6700 Ludwigshafen(DE)**
Erfinder: **Patsch, Manfred, Dr.**
**Fritz-Wendel-Strasse 4**
**D-6706 Wachenheim(DE)**
Erfinder: **Siegel, Bernd, Dr.**
**Faberstrasse 39**
**D-6700 Ludwigshafen(DE)**

**EP 0 387 579 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Reaktivfarbstoffe der Formel I

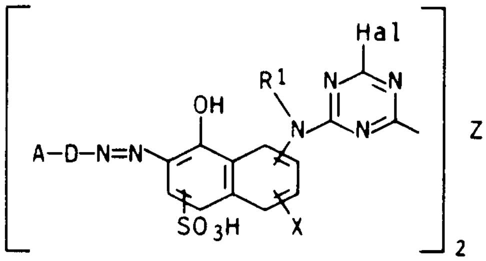

(I),

in der

| | |
|---|---|
| $R^1$ | Wasserstoff, Methyl oder Ethyl, |
| X | Wasserstoff oder Hydroxysulfonyl, |
| Hal | Fluor oder Chlor |
| D | Phenylen, durch Carboxy oder Hydroxysulfonyl ein- oder zweifach substituiertes Phenylen oder durch Hydroxysulfonyl ein- oder zweifach substituiertes Naphthylen, |
| A | einen faserreaktiven Rest oder der Rest A-D zusammen einen benzoanellierten faserreaktiven Rest und |
| Z | ein Brückenglied der Formel |

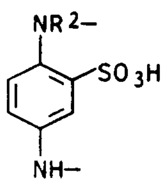 , 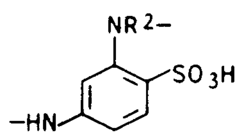 , 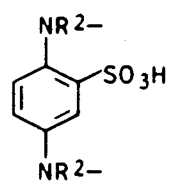 ,

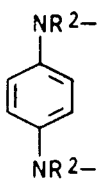 , 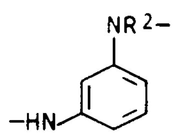 , 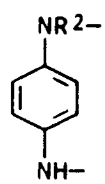 ,

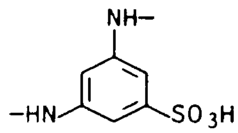 , 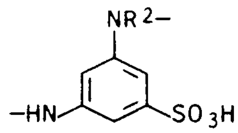 , 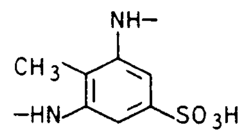 ,

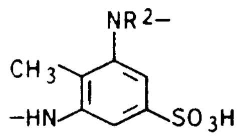 , 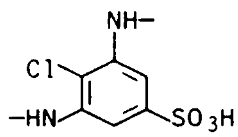 , 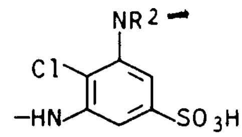 ,

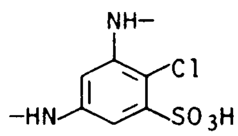 , 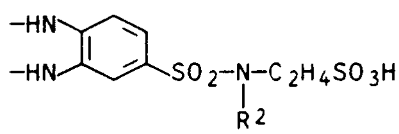 oder

$-NR^2-C_3H_6-NR^2-$ ,

worin $R^2$ für $C_1$-$C_4$-Alkyl steht, bedeuten.

Aus der JP-A-27 628/1978 sowie der DE-A-3 135 432 sind Reaktivfarbstoffe bekannt, die denen der Formel I ähnlich sind. Sie unterscheiden sich jedoch im Brückenglied Z, das die beiden Chromophorreste verbindet.

Es hat sich gezeigt, daß die Farbstoffe des Standes der Technik noch anwendungstechnische Mängel aufweisen. Aufgabe der vorliegenden Erfindung war es daher, neue Reaktivfarbstoffe bereitzustellen, die vorteilhafte Eigenschaften, insbesondere eine hohe Fixierausbeute, aufweisen.

Demgemäß wurden die eingangs näher bezeichneten Reaktivfarbstoffe der Formel I gefunden.

$R^2$ in Formel I ist z.B. Methyl, Ethyl, Propyl, Isopropyl, Butyl, Isobutyl oder sec-Butyl.

Reste D sind z.B.

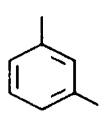 , 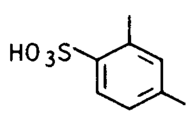 , 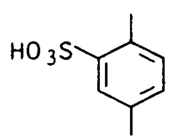 , 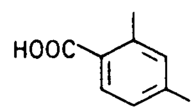 ,

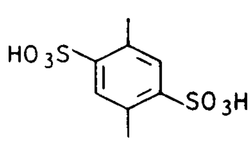 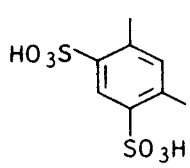 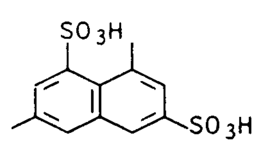 oder

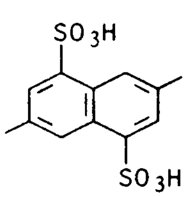 .

Faseraktive Reste A sind solche, die mit den Hydroxygruppen oder Stickstoff enthaltenden Gruppen der zu behandelnden Substrate substitutiv oder additiv reagieren. Daß der reaktive Rest A mit den betreffenden Gruppen in den Substraten, z.B. mit den Hydroxygruppen der Cellulose, substitutiv reagiert, bedeutet, daß die Austrittsgruppen oder -atome (z.B. Fluor oder Chlor) im faserreaktiven Rest A durch die Hydroxygruppen der Cellulose gemäß folgendem Schema substituiert werden:

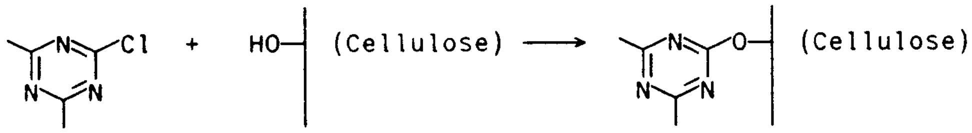

Daß der faserreaktive Rest A mit betreffenden Gruppen in den Substraten, z.B. mit den Hydroxygruppen der Cellulose, additiv reagiert, bedeutet, daß die Hydroxygruppen der Cellulose gemäß folgendem Schema an den faserreaktiven Rest addiert werden.

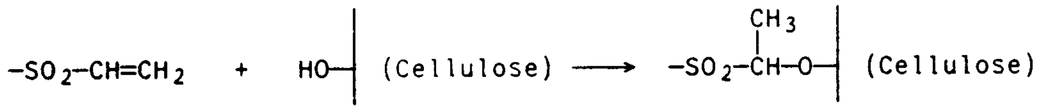

Faserreaktive Reste A sind z.B. der Vinylsulfonylrest, 2-Hydroxyethylsulfonylreste,die mit mehrbasigen anorganischen Säuren verestert sind, und unter Färbebedingungen den Vinylsulfonylrest ergeben, halogensubstituierte Reste von 1,3,5-Triazin, Chinoxalin, Phthalazin, Pyrimidin oder Pyridazon, oder der 2-Alkylsulfonylbenzthiazolrest.

Beispielhaft seien folgende Reste genannt:

$-SO_2-C_2H_4OSO_3H$, $-SO_2-C_2H_4OPO_3H_2$,

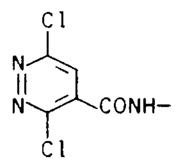 , 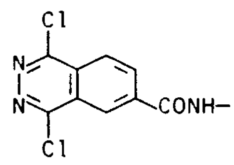 , 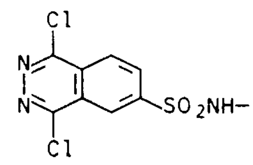 ,

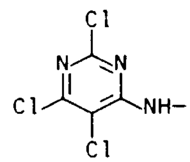 , 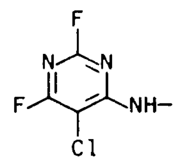 , 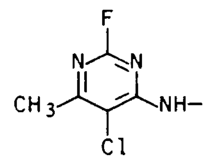 ,

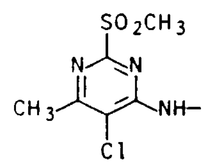 , 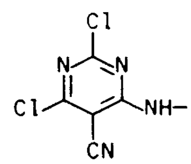 , 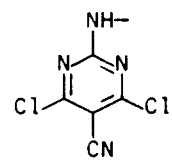 ,

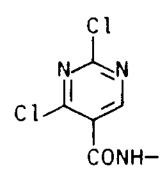 , 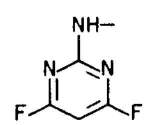 , 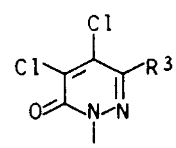 ,

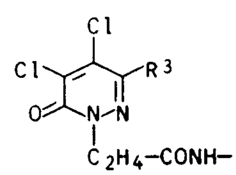 , 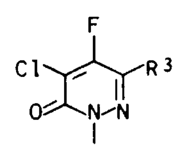 , 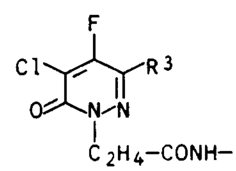 ,

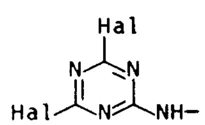 , 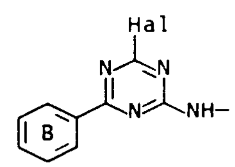 , 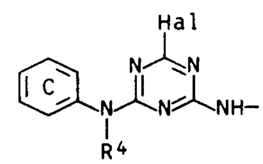

oder 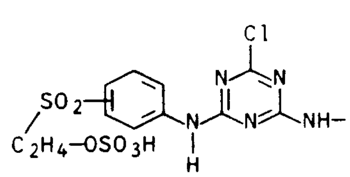 ,

wobei Hal für Fluor oder Chlor und

$R^3$ für Wasserstoff oder Nitro stehen und die Ringe B und C jeweils durch einen Hydroxysulfonylrest und der Ring C davon unabhängig durch Chlor, Nitro, bis zu zwei Methoxygruppen oder bis zu drei $C_1$-$C_4$-Alkylgruppen substituiert sein können.

Wenn der Rest A-D einen benzoanellierten reaktiven Rest bedeutet, so kommt z.B. der 2-Alkylsulfonylbenzthiazolrest in Betracht. Beispielhaft seien die Reste

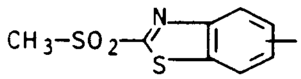 oder 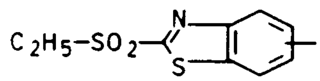

genannt.

Reste der Kupplungskomponente der Formel

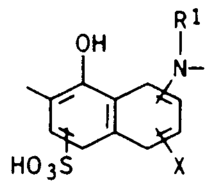

sind beispielsweise

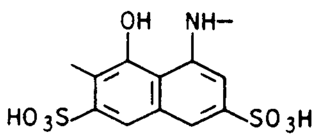 , 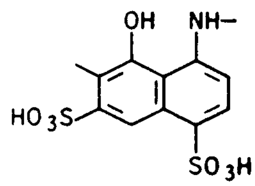 ,

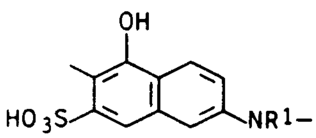 , 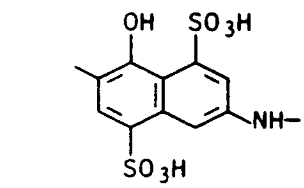

oder 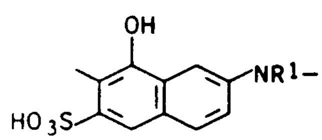 ,

wobei $R^1$ für Wasserstoff, Methyl oder Ethyl steht.

Bevorzugt sind Reaktivfarbstoffe der Formel I, in der A einen Rest der Formel

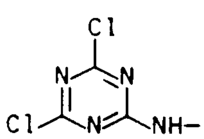 , 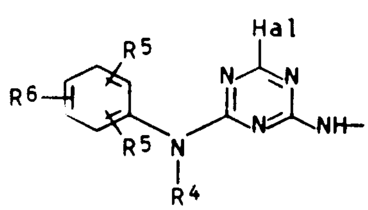 ,

$-SO_2-C_2H_4OSO_3H$ oder $-SO_2-CH=CH_2$ bedeutet, wobei Hal die obengenannte Bedeutung besitzt und

$R^4$ für Wasserstoff oder $C_1$-$C_4$-Alkyl,

$R^5$ für Wasserstoff, $C_1$-$C_4$-Alkyl oder $C_1$-$C_4$-Alkoxy und

$R^6$ für Wasserstoff, $C_1$-$C_4$-Alkyl oder Hydroxysulfonyl stehen.

Weiterhin bevorzugt sind Reaktivfarbstoffe der Formel I, in der D den Rest

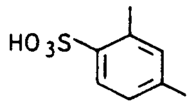

oder

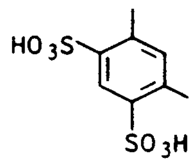

bedeutet.

Weiterhin bevorzugt sind Reaktivfarbstoffe der Formel I, in der der Rest

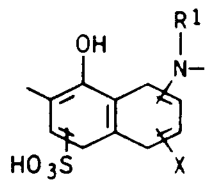

für

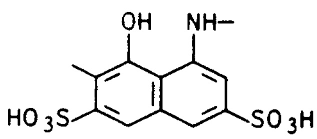

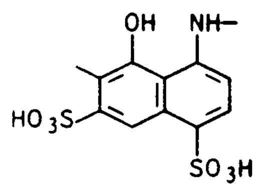

oder

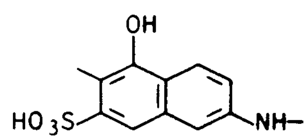

steht.

Weiterhin bevorzugt sind Reaktivfarbstoffe der Formel I, in der das Brückenglied Z der Formel $Z^1$ entspricht und den Rest

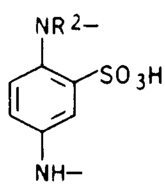

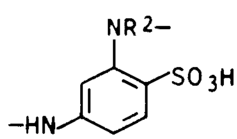

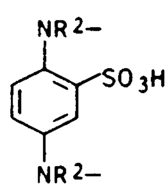

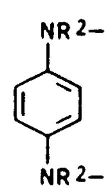

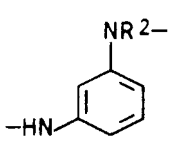

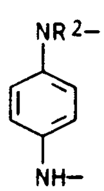

oder

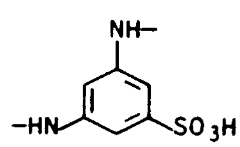

bedeutet, wobei $R^2$ jeweils die obengenannte Bedeutung besitzt.

Besonders bevorzugt sind Reaktivfarbstoffe der Formel Ia

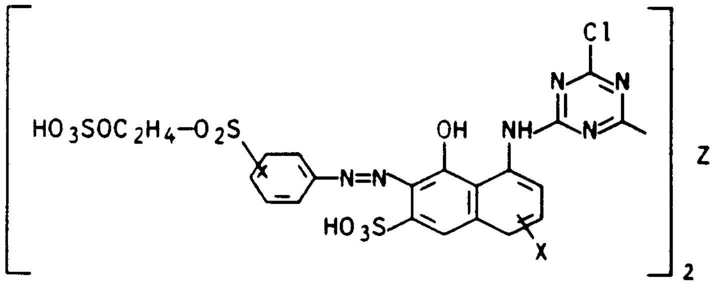

(Ia),

in der

X Wasserstoff oder Hydroxysulfonyl bedeutet und $Z^1$ die obengenannte Bedeutung besitzt.

Weiterhin besonders bevorzugt sind Reaktivfarbstoffe der Formel Ib

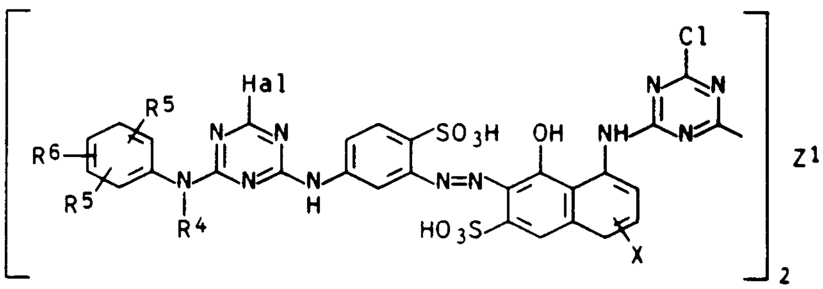

(Ib),

in der

- Hal Fluor oder Chlor,
- $R^4$ Wasserstoff oder $C_1$-$C_4$-Alkyl,
- $R^5$ Wasserstoff, $C_1$-$C_4$-Alkyl oder $C_1$-$C_4$-Alkoxy,
- $R^6$ Wasserstoff, $C_1$-$C_4$-Alkyl oder Hydroxysulfonyl und
- X Wasserstoff oder Hydroxysulfonyl bedeuten und
- $Z^1$ die obengenannte Bedeutung besitzt.

Weiterhin besonders bevorzugt sind Reaktivfarbstoffe, die der Formel Ic

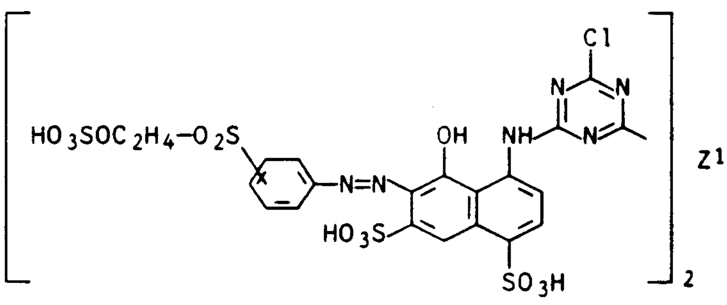

(Ic)

gehorchen, in der $Z^1$ die obengenannte Bedeutung besitzt.

Weiterhin besonders bevorzugt sind Reaktivfarbstoffe, die der Formel Id

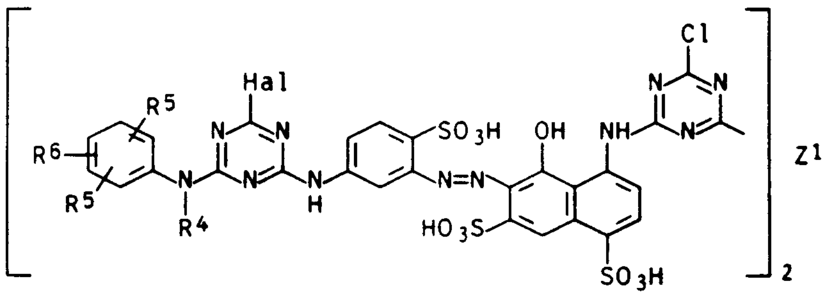 (Id)

gehorchen in der

Hal Fluor oder Chlor,

$R^4$ Wasserstoff oder $C_1$-$C_4$-Alkyl,

$R^5$ Wasserstoff, $C_1$-$C_4$-Alkyl oder $C_1$-$C_4$-Alkoxy und

$R^6$ Wasserstoff, $C_1$-$C_4$-Alkyl oder Hydroxysulfonyl bedeuten und

$Z^1$ die obengenannte Bedeutung besitzt.

Insbesondere hervorzuheben sind Reaktivfarbstoffe der Formel Ib in der $R^4$ und $R^5$ jeweils Wasserstoff und $R^6$ Hydroxysulfonyl oder in der $R^4$ Wasserstoff, $R^5$ o,o'-$C_1$-$C_2$-Alkyl und $R^6$ Methyl oder Wasserstoff bedeuten.

Die Herstellung der neuen Reaktivfarbstoffe der Formel I erfolgt nach an sich bekannten Methoden.

Beispielsweise kann man

a) ein Amin der Formel II

$A$-$D$-$NH_2$ (II),

in der A und D jeweils die obengenannte Bedeutung besitzt, diazotieren und mit einer Kupplungskomponente der Formel III

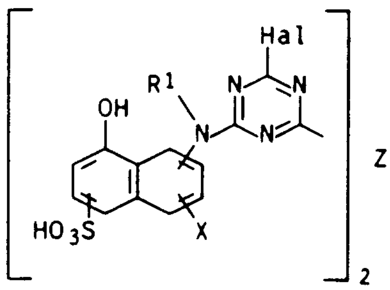 (III)

in der $R^1$, X, Z und Hal jeweils die obengenannte Bedeutung besitzen, kuppeln.

Eine weitere Methode besteht beispielsweise darin, daß man

b) ein Amin der Formel II diazotiert und mit einer Kupplungskomponente der Formel IV

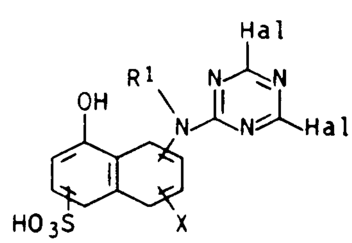 (IV),

in der $R^1$, X und Hal jeweils die obengenannte Bedeutung besitzen, kuppelt und anschließend mit einer Verbindung der Formel V

$ZH_2$ (V),

in der Z die obengenannte Bedeutung besitzt, umsetzt.

Eine weitere Methode besteht beispielsweise darin, daß man

c) ein Amin der Formel VI

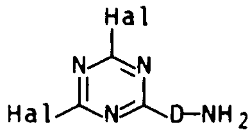

(VI),

in der Hal und D jeweils die obengenannte Bedeutung besitzen, diazotiert, mit einer Kupplungskomponente III kuppelt und anschließend gegebenenfalls noch mit einem Anilinderivat der Formel VII

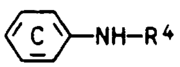

(VII),

in der $R^4$ und der Ring C jeweils die obengenannte Bedeutung besitzen, umsetzt.

Die neuen Reaktivfarbstoffe der Formel I eignen sich in vorteilhafter Weise zum Färben oder Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle. Sie zeichnen sich dabei durch hohe Fixierausbeuten aus.

Die folgenden Beispiele sollen die Erfindung näher erläutern.

Beispiel 1

a) In eine eiskalte Suspension aus 2-Methylamino-5-aminobenzolsulfonsäure, hergestellt durch Ansäuern der Lösung von 63 g des Natriumsalzes in 1000 ml Eiswasser (bis pH 2), wurden 111 g Cyanurchlorid eingetragen. Durch Einstreuen von 77 g Natriumhydrogencarbonat wurde ein pH-Wert von 5 eingestellt und 3 Stunden bei 0 bis 5 °C nachgerührt, bis die Aminogruppen vollständig acyliert waren. Zur Suspension der Bisacylverbindung goß man eine Lösung von 191 g 1-Aminonaphth-8-ol-3,6-disulfonsäure in 400 ml Wasser und 35 ml 50 gew.%ige Natronlauge zu, stellte einen pH-Wert von 5 ein und rührte drei Stunden bei 40 °C. Von einem geringen Schwebstoffanteil wurde nun abfiltriert und das Produkt der Formel

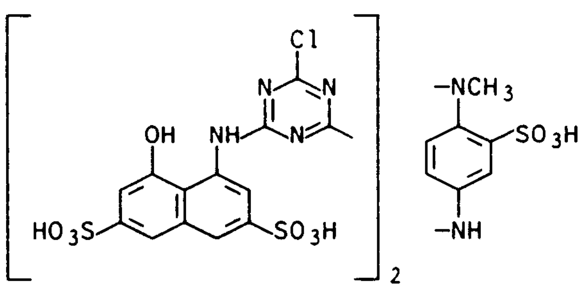

mit 600 g Kochsalz gefällt. Der Niederschlag wurde abgesaugt, mit 15 gew.%iger Kochsalzlösung gewaschen und als feuchtes Nutschgut zu den im folgenden beschriebenen Farbstoffen verarbeitet. Die Rohausbeute betrug 91 % der Theorie als Tetranatriumsalz.

b) 14,1 g (0,05 Mol) 4-(2-Sulfatoethylsulfonyl)anilin wurden mit 10 ml einer gesättigten Natriumacetatlösung in 150 ml Wasser bei Raumtemperatur gelöst und mit 75 g Eis in einem Eisbad unter Rühren gekühlt. Dazu ließ man gleichzeitig 15 ml 3,33 n wäßrige Natriumnitritlösung und 15 ml 30 gew.%ige Salzsäure eintropfen und rührte ca. eine Stunde bei 0 bis 5 °C nach. Nach dem Zerstören überschüssiger salpetriger Säure mit Amidosulfonsäure wurde die erhaltene Suspension mit der Lösung aus 0,024 Mol der Kupplungskomponente aus a) in 200 ml Wasser versetzt. Durch Eintropfen von 15 ml gesättigter Natriumacetatlösung (bis zu einem pH-Wert von 2) und zweistündiges Rühren unter Erwärmen auf Raumtemperatur erfolgte die Kupplung. Der erhaltene Farbstoff der Formel

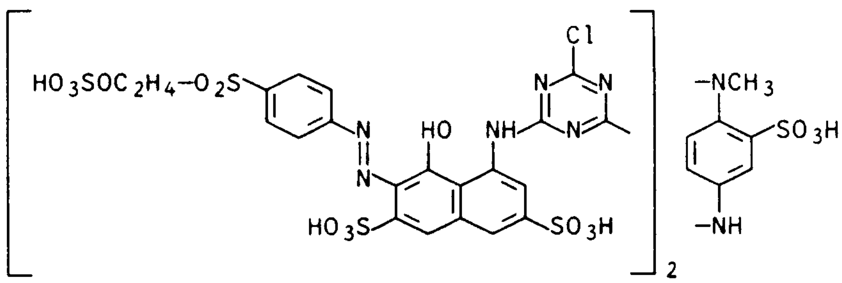

wurde mit 150 g Kaliumchlorid gefällt, abgesaugt, mit Aceton gewaschen und unter vermindertem Druck bei Raumtemperatur getrocknet.

Er färbt Baumwolle aus alkalischem Bad ab Raumtemperatur in weitem Temperaturbereich in blaustichig roten Tönen mit sehr hoher Farbausbeute.

Beispiel 2

a) Die Lösung von 0,38 mol 1-Aminonaphth-8-ol-3,6-disulfonsäure in 250 ml Wasser und 21 ml 50 gew.%iger Natronlauge ließ man zu einer gut gerührten Aufschlämmung von 73,8 g (0,4 Mol) Cyanurchlorid in 450 ml Eiswasser und 5 ml 30 gew.%iger Salzsäure einfließen und rührte 2,5 Stunden bei 5 bis 8 ° C nach, bis das Aminonaphthalin vollständig acyliert war. Zu dieser Lösung wurde nun die Lösung von 34 g (0,18 Mol) 3,5-Diaminobenzol-1-sulfonsäure in 200 ml Wasser und 10 ml 50 gew.%iger Natronlauge eingegossen und mit 20 gew.%iger, eiskalter Natronlauge ein pH-Wert von 5 eingestellt. Nach Rühren über Nacht bei pH 5 und Raumtemperatur wurde das resultierende Produkt der Formel

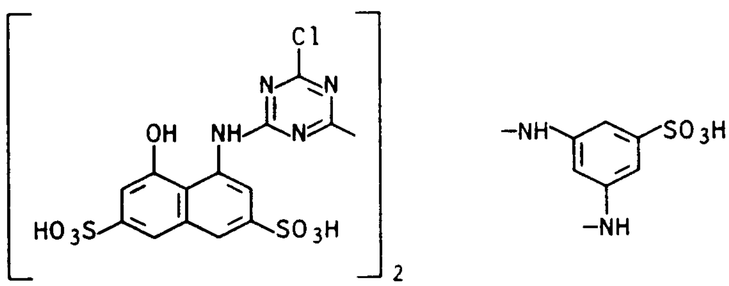

als Natriumsalz abgesaugt, mit 5 gew.%iger Kochsalzlösung gewaschen und in in die im folgenden beschriebenen Kupplungsreaktionen eingesetzt. Die Ausbeute an Rohprodukt betrug 93 % d. Th.

b) 20,3 g (0,05 Mol) 2-(N-Methyl-N-phenylamino)-4-chlor-6-(3'-amino-4'-hydroxysulfonylphenylamino)-s-triazin wurden mit Natriumbicarbonat in 250 ml Wasser (bis pH 7) gelöst und mit 15 ml 3,33 N wäßriger Natriumnitritlösung versetzt. Diazotierung erfolgte durch langsames Eingießen dieser Lösung in 100 g Eis und 15 ml 30 gew.%iger Salzsäure.

Nach einstündigem Rühren in der Eiskälte zerstörte man überschüssige salpetrige Säure mit Amidosulfonsäure und ließ die gallertartige, gelbliche Lösung zu einer Aufschlämmung von 0,024 Mol der binären Kupplungskomponenten a) in 250 ml Wasser, 100 g Eis und 15 g Natriumbicarbonat einfließen. Der gebildete Farbstoff der Formel

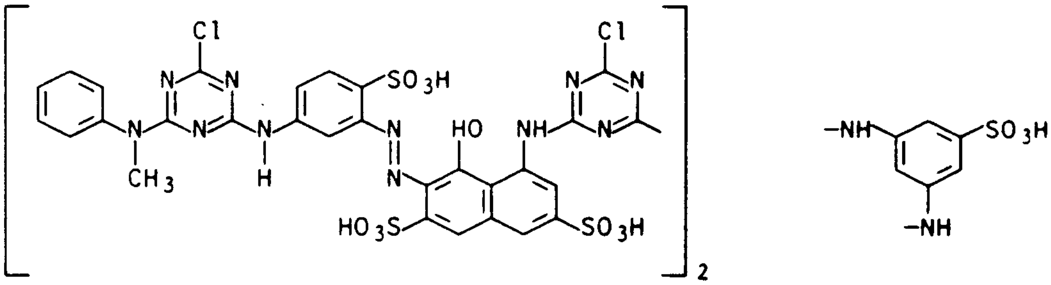

wurde mit 100 g Kochsalz aus der Lösung gefällt, abgesaugt, mit 2,5 gew.%iger Kochsalzlösung, dann mit Aceton gewaschen und bei Raumtemperatur unter vermindertem Druck getrocknet. Er färbt Baumwolle aus alkalischem Bad nach dem Ausziehverfahren bei 80 °C in blaustichigen Rottönen mit sehr hoher Fixierausbeute.

Die in der folgenden Tabelle 1 aufgeführten Farbstoffe werden in analoger Weise erhalten und ergeben ebenso blaustichige bis gelbstichige Rottöne mit sehr hoher Farbausbeute.

Tabelle 1

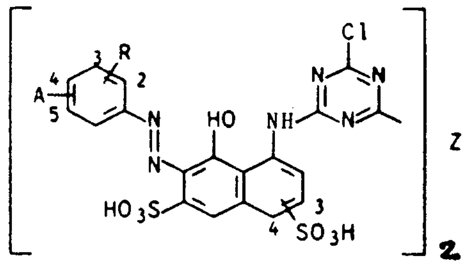

| Bsp.-Nr. | A | R | 3-/4-$SO_3H$ | Z | Farbton Baumwolle |
|---|---|---|---|---|---|
| 3 | 5-$SO_2$-$C_2H_4$-$OSO_3H$ | H | 3 | 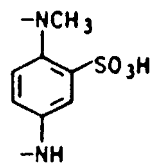 | rot |
| 4 | 4-$SO_2$-$C_2H_4$-$OSO_3H$ | H | 3 | 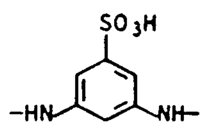 | blaust. rot |
| 5 | 5- 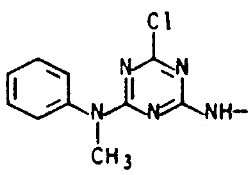 | 2-$SO_3H$ | 3 | 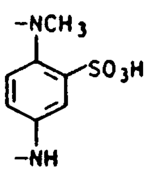 | blaust. rot |
| 6 | 5- 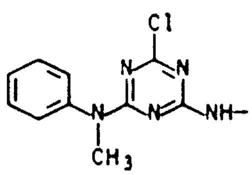 | $SO_3H$ | 3 | 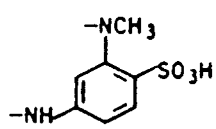 | rot |
| 7 | 4-$SO_2$-$C_2H_4$-$OSO_3H$ | H | 3 | 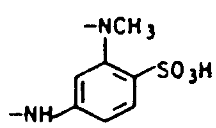 | rot |
| 8 | 5-$SO_2$-$C_2H_4$-$OSO_3H$ | H | 3 | 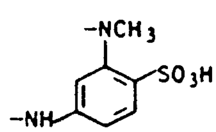 | rot |

Tabelle 1 (Fortsetzung)

| Bsp.-Nr. | A | R | 3-/4-$SO_3H$ | Z | Farbton Baumwolle |
|---|---|---|---|---|---|
| 9 | 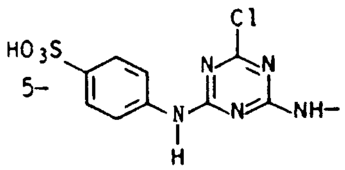 | 2-$SO_3H$ | 3 | 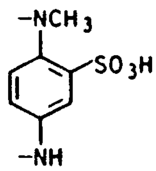 | blaust. rot |
| 10 | 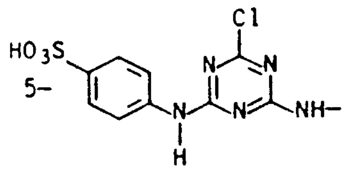 | 2-$SO_3H$ | 3 | 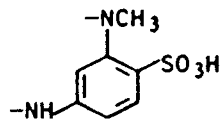 | rot |
| 11 | 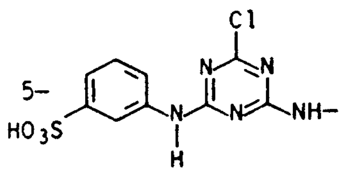 | 2-$SO_3H$ | 3 | 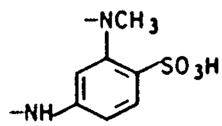 | rot |
| 12 | 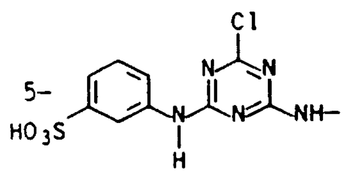 | 2-$SO_3H$ | 3 | 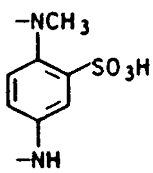 | blaust. rot |
| 13 | 5- 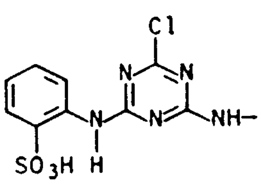 | 2-$SO_3H$ | 3 | 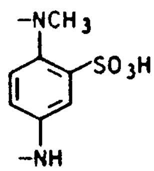 | blaust. rot |
| 14 | 5- 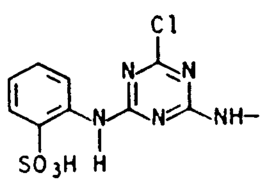 | 2-$SO_3H$ | 3 | 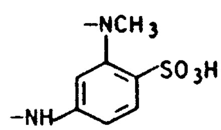 | rot |

Tabelle 1 (Fortsetzung)

| Bsp.-Nr. | A | R | 3-/4-$SO_3H$ | Z | Farbton Baumwolle |
|---|---|---|---|---|---|
| 15 | 5- 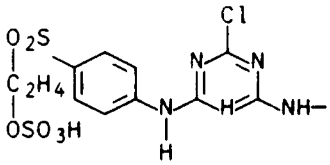 | 2-$SO_3H$ | 3 | 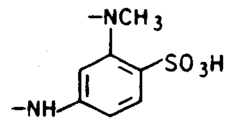 | rot |
| 16 | 5- 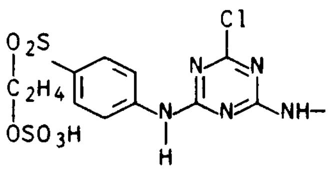 | 2-$SO_3H$ | 3 | 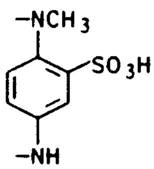 | blaust. rot |
| 17 | 5- 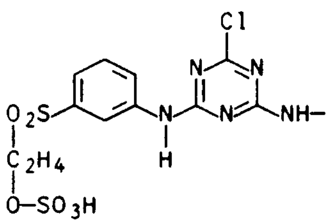 | 2-$SO_3H$ | 3 | 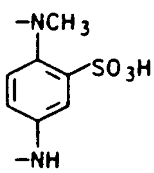 | blaust. rot |
| 18 | 5- 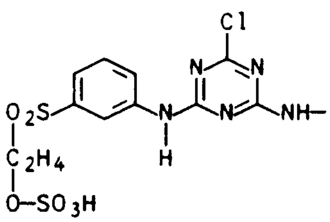 | 2-$SO_3H$ | 3 | 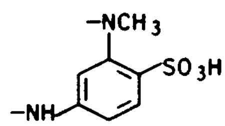 | rot |
| 19 | 5- 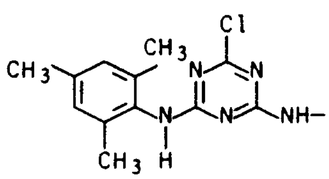 | 2-$SO_3H$ | 3 | 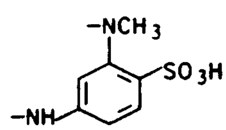 | rot |
| 20 | 5- 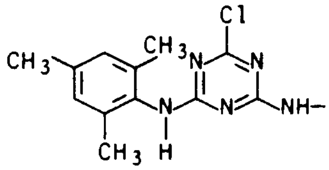 | 2-$SO_3H$ | 3 | 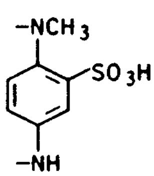 | blaust. rot |

Tabelle 1 (Fortsetzung)

| Bsp.-Nr. | | A | R | 3-/4-$SO_3H$ | Z | Farbton Baumwolle |
|---|---|---|---|---|---|---|
| 21 | 5– | 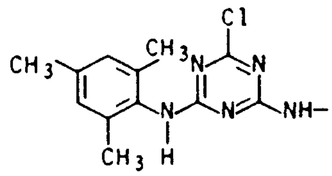 | 2-$SO_3H$ | 3 | 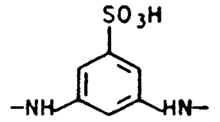 | rot |
| 22 | 5– | 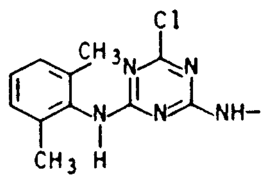 | 2-$SO_3H$ | 3 | 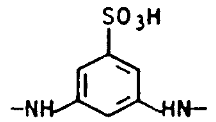 | rot |
| 23 | 5– | 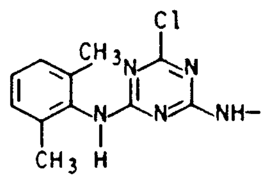 | 2-$SO_3H$ | 3 | 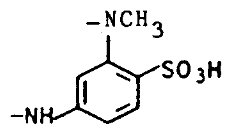 | rot |
| 24 | 5– | 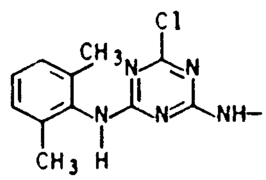 | 2-$SO_3H$ | 3 | 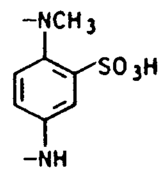 | blaust. rot |
| 25 | 5– | 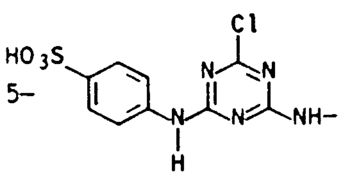 | 2-$SO_3H$ | 3 | 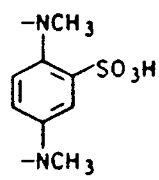 | blaust. rot |
| 26 | 5– | 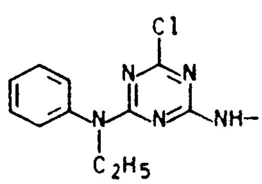 | 2-$SO_3H$ | 3 | 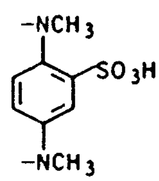 | blaust. rot |

Tabelle 1 (Fortsetzung)

| Bsp.-Nr. | A | R | 3-/4-$SO_3H$ | Z | Farbton Baumwolle |
|---|---|---|---|---|---|
| 27 | 5- 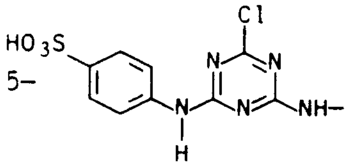 | 2-$SO_3H$ | 3 | 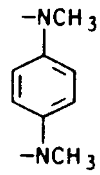 | blaust. rot |
| 28 | 5- 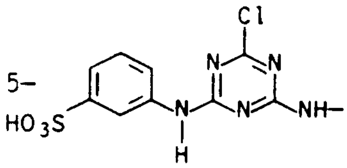 | 2-$SO_3H$ | 3 | 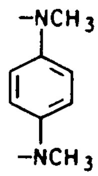 | blaust. rot |
| 29 | 5- 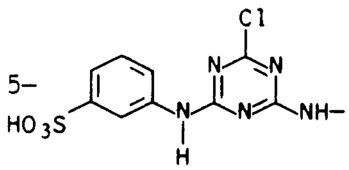 | 2-$SO_3H$ | 3 | 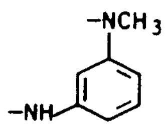 | rot |
| 30 | 5- 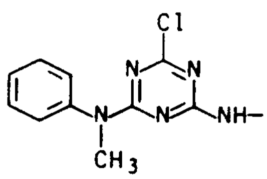 | 2-$SO_3H$ | 3 | 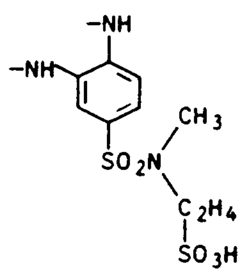 | rot |
| 31 | 5- 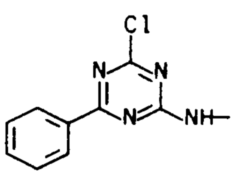 | 2-$SO_3H$ | 3 | 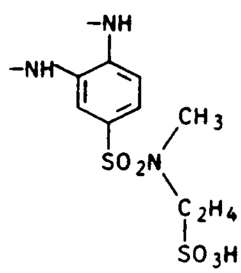 | rot |

Tabelle 1 (Fortsetzung)

| Bsp.-Nr. | A | | R | 3-/4-$SO_3H$ | Z | Farbton Baumwolle |
|---|---|---|---|---|---|---|
| 32 | 5– | 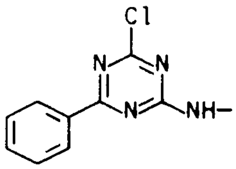 | 2-$SO_3H$ | 3 | 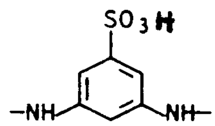 | rot |
| 33 | 5– | 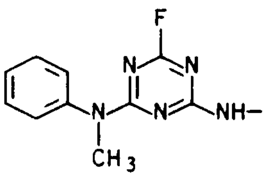 | 2-$SO_3H$ | 3 | 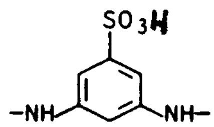 | rot |
| 34 | 5– | 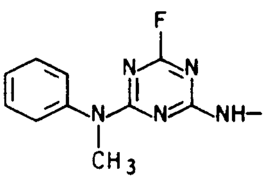 | 2-$SO_3H$ | 3 | 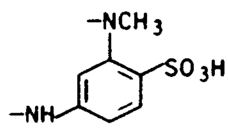 | rot |
| 35 | 5– | 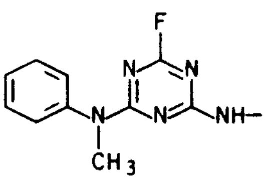 | 2-$SO_3H$ | 3 | 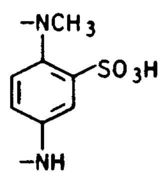 | blaust. rot |
| 36 | 5– | 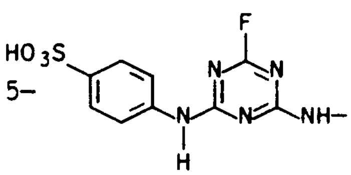 | 2-$SO_3H$ | 3 | 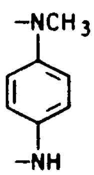 | blaust. rot |
| 37 | 5– | 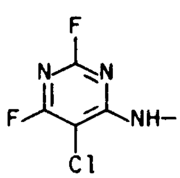 | 2-$SO_3H$ | 3 | 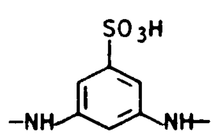 | rot |

Tabelle 1 (Fortsetzung)

| Bsp.-Nr. | A | R | 3-/4-$SO_3H$ | Z | Farbton Baumwolle |
|---|---|---|---|---|---|
| 38 | 5- 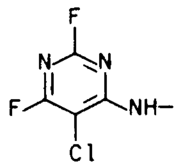 | 2-$SO_3H$ | 3 | 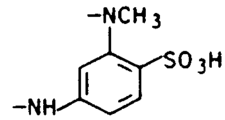 | rot |
| 39 | 5- 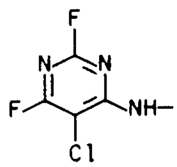 | 2-$SO_3H$ | 3 | 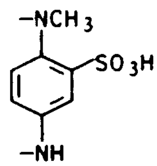 | blaust. rot |
| 40 | 5- 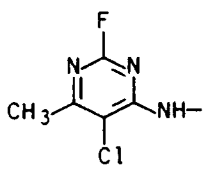 | 2-$SO_3H$ | 3 | 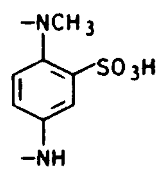 | blaust. rot |
| 41 | 5- 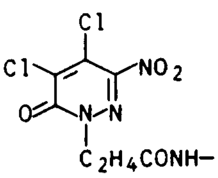 | 2-$SO_3H$ | 3 | 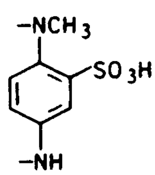 | blaust. rot |
| 42 | 5- 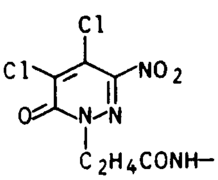 | 2-$SO_3H$ | 3 | 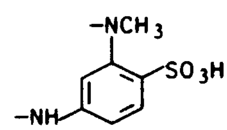 | rot |
| 43 | 5- 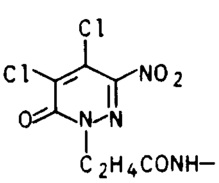 | 2-$SO_3H$ | 3 | 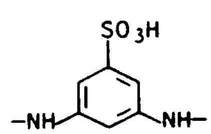 | rot |

Tabelle 1 (Fortsetzung)

| Bsp.-Nr. | A | R | 3-/4-$SO_3H$ | Z | Farbton Baumwolle |
|---|---|---|---|---|---|
| 44 | 5- 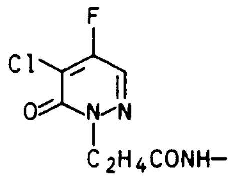 | 2-$SO_3H$ | 3 | 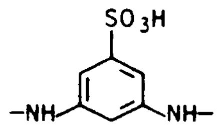 | rot |
| 45 | 5- 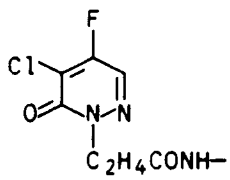 | 2-$SO_3H$ | 3 | 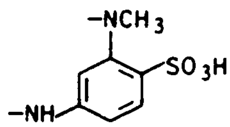 | rot |
| 46 | 5- 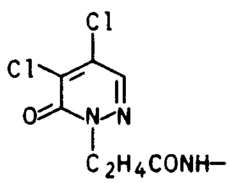 | 2-$SO_3H$ | 3 | 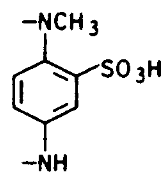 | blaust. rot |
| 47 | 4- 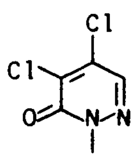 | 3-$SO_3H$ | 3 | 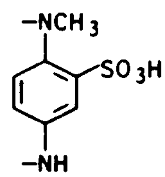 | blaust. rot |
| 48 | 4- 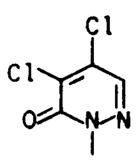 | 2-$SO_3H$ | 3 | 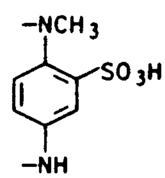 | blaust. rot |
| 49 | 4- 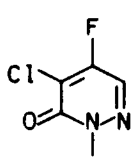 | 2-$SO_3H$ | 3 | 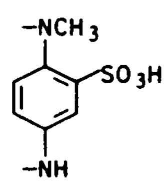 | blaust. rot |

Tabelle 1 (Fortsetzung)

| Bsp.-Nr. | A | R | 3-/4-$SO_3H$ | Z | Farbton Baumwolle |
|---|---|---|---|---|---|
| 50 | 5- 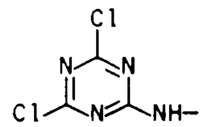 | 2-$SO_3H$ | 3 | 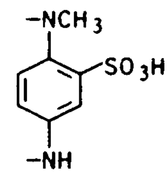 | blaust. rot |
| 51 | 5- 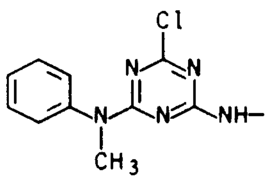 | 2-$SO_3H$ | 3 | $-NH-C_3H_6-NCH_3-$ | rot |
| 52 | 4- 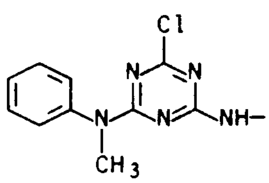 | H | 3 | 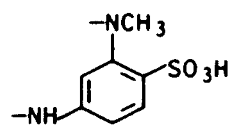 | violett |

Beispiel 53

a) 21,9 g (0,14 Mol) 1-Amino-3-methylaminobenzol-4-sulfonsäure (in Betainform) wurden mit 36 ml 10 gew.%iger Natronlauge in 100 ml Wasser bei pH 7 gelöst. Man ließ diese Lösung in eine Aufschlämmung von 51,7 g Cyanurchlorid in 250 ml Eiswasser und 1 ml 30 gew.%iger Salzsäure einfließen und stellte mit 30 g Natriumhydrogencarbonat einen pH-Wert von 5 ein. Nach dreistündigem Rühren bei 0 bis 5 ° C und pH 5 war eine Probe nicht mehr kupplungsfähig und die Diacylaminobenzolsulfonsäure lag als Natriumsalz in Lösung vor. Dazu ließ man nun die Lösung von 0,28 Mol 1-Aminonapth-8-ol-4,6-disulfonsäure in 200 ml Wasser und 17 ml 50 gew.%iger Natronlauge einfließen und stellte unter Erwärmung auf Raumtemperatur mit 16 g Natriumhydrogencarbonat einen pH-Wert von 4 ein. Nach 4-stündigem Rühren unter diesen Bedingungen war die Doppelkondensation beendet. Das Reaktionsprodukt wurde bei pH 1 mit 400 g Kaliumchlorid ausgefällt, abgesaugt und mit 27 gew.%igen Kaliumchloridlösung säurefrei gewaschen.

b) Analog Beispiel 1b wurde 4-(2-Sulfatoethylsulfonyl)anilin mit der Komponente aus Beispiel 53a gekuppelt. Man erhielt den Farbstoff der Formel

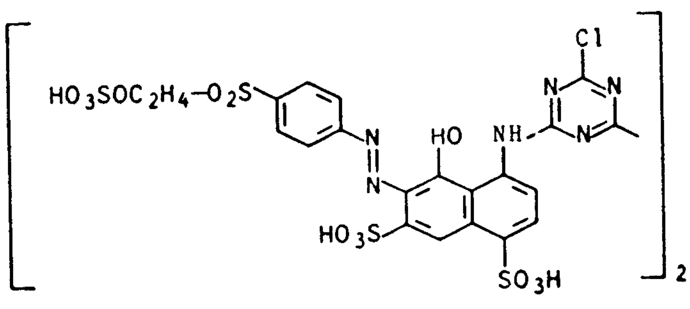

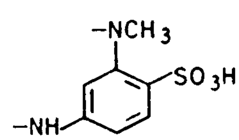

der Baumwolle aus alkalischem Bad in gelbstichigen Rottönen mit hoher Farbausbeute färbt.

Analog verhalten sich die Farbstoffe der Formel

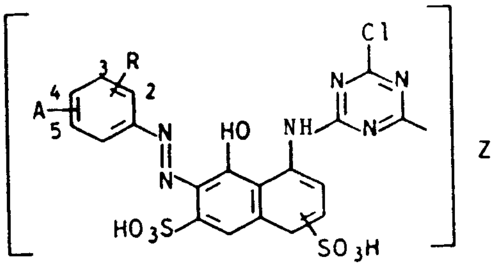

,

die in der folgenden Tabelle 2 aufgeführt sind, und die gemäß den Beispielen 1, 2 und 53 erhalten werden.

Tabelle 2

| Bsp.-Nr. | A | R | 3-/4-$SO_3H$ | Z | Farbton Baumwolle |
|---|---|---|---|---|---|
| 54 | 5- $SO_2C_2H_4-OSO_3H$ | H | 4 | 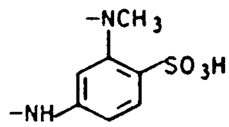 | gelbst. rot |
| 55 | 4- $SO_2C_2H_4-OSO_3H$ | H | 4 | 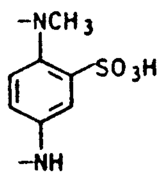 | gelbst. rot |
| 56 | 5- $SO_2C_2H_4-OSO_3H$ | H | 4 | 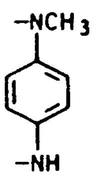 | gelbst. rot |
| 57 | 4- $SO_2C_2H_4-OSO_3H$ | H | 4 | 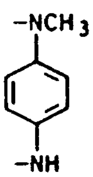 | gelbst. rot |
| 58 | 5- 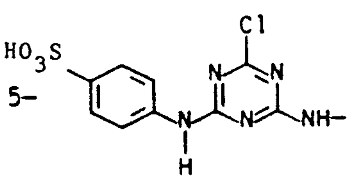 | 2-$SO_3H$ | 4 | 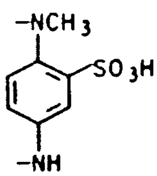 | gelbst. rot |
| 59 | 5- 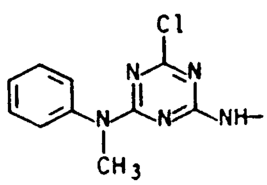 | 2-$SO_3H$ | 4 | 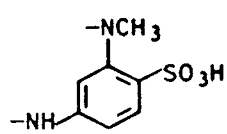 | gelbst. rot |

Tabelle 2 (Fortsetzung)

| Bsp.-Nr. | A | R | 3-/4-$SO_3H$ | Z | Farbton Baumwolle |
|---|---|---|---|---|---|
| 60 | 4– 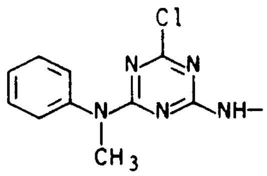 | 2-$SO_3H$ | 4 | 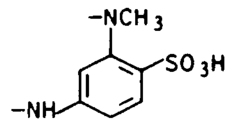 | gelbst. rot |
| 61 | 5– 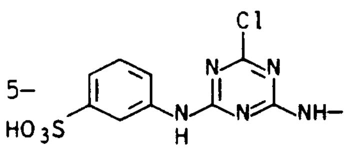 | 2-$SO_3H$ | 4 | 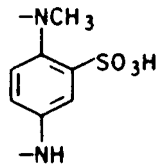 | gelbst. rot |
| 62 | 5– 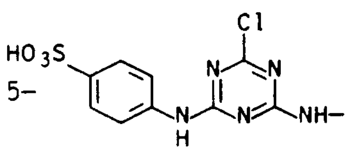 | 2-$SO_3H$ | 4 | 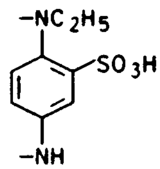 | gelbst. rot |
| 63 | 5– 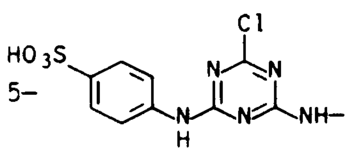 | 2-$SO_3H$ | 4 | 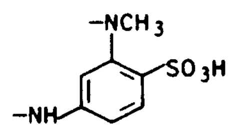 | gelbst. rot |
| 64 | 5– 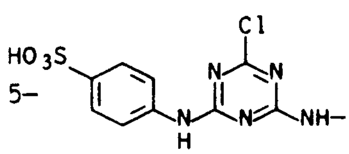 | 2-$SO_3H$ | 4 | 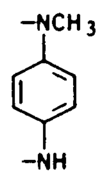 | gelbst. rot |
| 65 | 5– 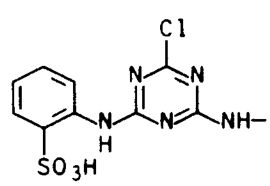 | 2-$SO_3H$ | 4 | 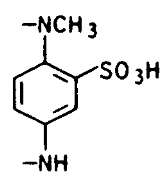 | gelbst. rot |

Beispiel 66

23,9 g 2-Amino-5-hydroxynaphthalin-7-sulfonsäure-Na-Salz wurden in 200 ml Wasser gelöst. Diese Lösung ließ man zu einer Aufschlämmung von 18,4 g Cyanurchlorid in 150 ml Eiswasser fließen und stellte mit Natriumhydrogencarbonat einen pH-Wert von 3 ein. Nach einstündigem Rühren bei 0 bis 5 °C wurde

filtriert und dem Filtrat 10,1 g 1-Methylamino-3-aminobenzol-6-sulfonsäure-Na-Salz, in 100 ml Wasser gelöst, zugesetzt. Mit Natriumhydrogencarbonat wurde dann ein pH-Wert von 6 eingestellt und 2 Stunden bei 45 bis 50 ° C gerührt, bis die Umsetzung beendet war.

Durch Kupplung mit 0,1 Mol einer nach Beispiel 1b erhaltenen Diazoniumverbindung wurde der Farbstoff der Formel

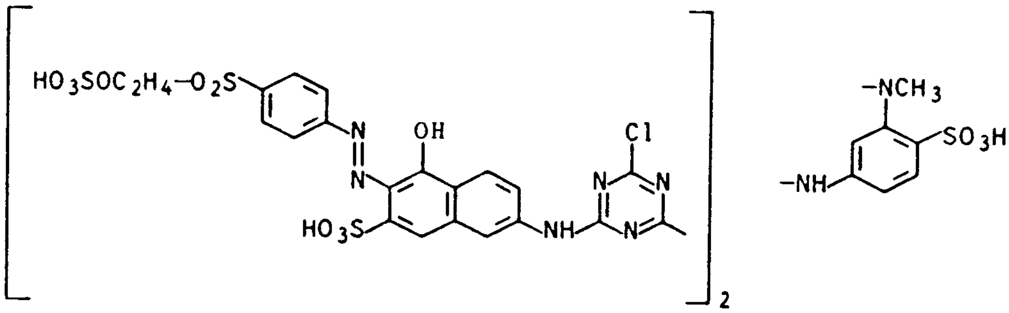

erhalten, der Baumwolle aus alkalischem Bad bei einer Temperatur von ca. 20 bis 80 ° C in orangefarbenen Tönen mit hoher Fixierausbeute färbt.

Analog den Beispielen 1, 2, 53 sowie 66 werden die in der Tabelle 3 aufgeführten Farbstoffe der Formel

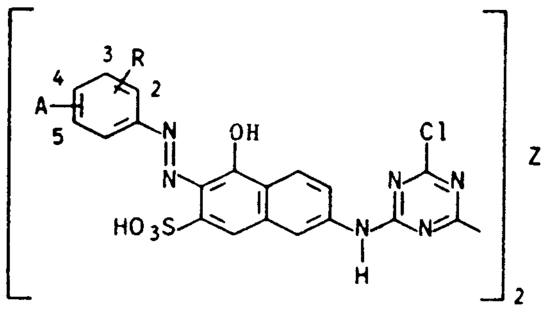

erhalten, die sich ebenfalls durch hohe Fixierausbeuten auszeichnen.

Tabelle 3

| Bsp.-Nr. | A | R | Z | Farbton Baumwolle |
|---|---|---|---|---|
| 67 | 5- $SO_2-C_2H_4-OSO_3H$ | H | 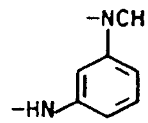 | orange |
| 68 | 4- $SO_2-C_2H_4-OSO_3H$ | H | 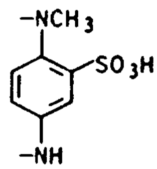 | orange |
| 69 | 5- $SO_2-C_2H_4-OSO_3H$ | H | 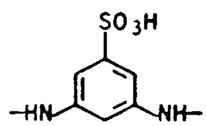 | orange |
| 70 | 5- 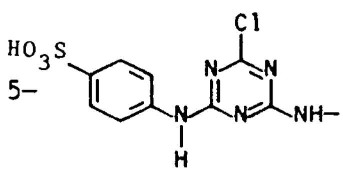 | $2-SO_3H$ | 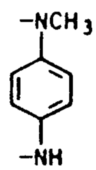 | orange |
| 71 | 5- 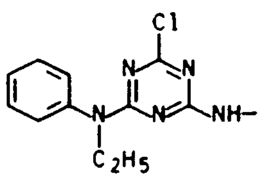 | $2-SO_3H$ | 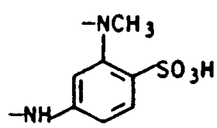 | orange |
| 72 | 5- 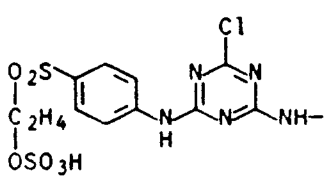 | $2-SO_3H$ | 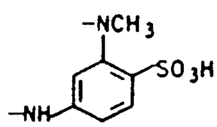 | orange |
| 73 | 5- 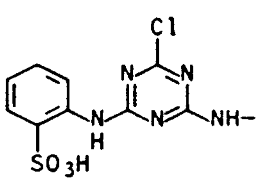 | $2-SO_3H$ | 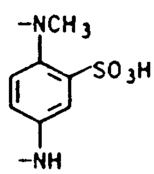 | orange |

## Patentansprüche

**1.** Reaktivfarbstoffe der Formel I

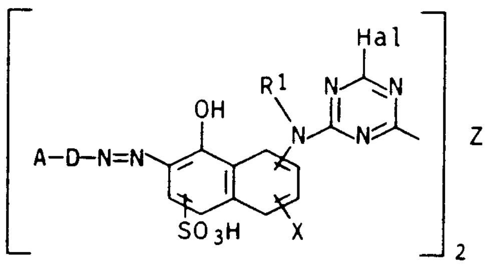 (I),

in der

R¹ Wasserstoff, Methyl oder Ethyl,

X Wasserstoff oder Hydroxysulfonyl,

Hal Fluor oder Chlor

D Phenylen, durch Carboxy oder Hydroxysulfonyl ein- oder zweifach substituiertes Phenylen oder durch Hydroxysulfonyl ein- oder zweifach substituiertes Naphthylen,

A einen faserreaktiven Rest oder der Rest A-D zusammen einen benzoanellierten faserreaktiven Rest und

Z ein Brückenglied der Formel

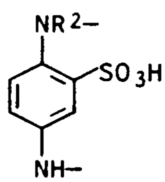 , 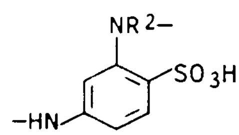 , 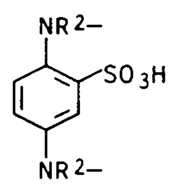 ,

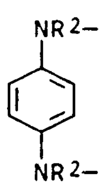 , 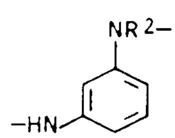 , 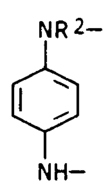 ,

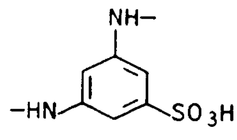 , 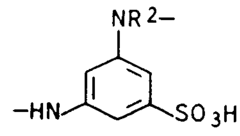 , 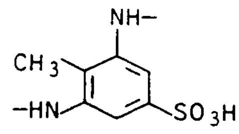 ,

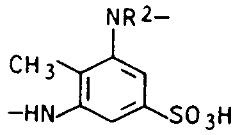 , 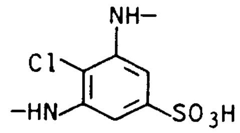 , 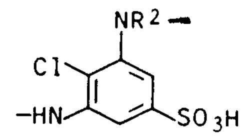 ,

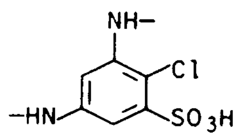 , 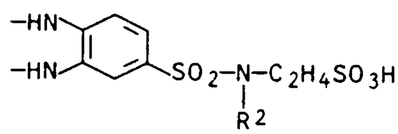 oder

$-NR^2-C_3H_6-NR^2-$ ,
worin $R^2$ für $C_1$-$C_4$-Alkyl steht, bedeuten.

**2.** Reaktivfarbstoffe gemäp Anspruch 1, dadurch gekennzeichnet, daß Z der Formel $Z^1$ entspricht und den Rest

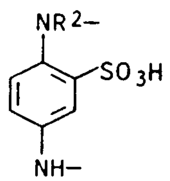 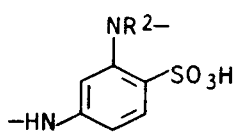 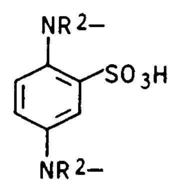 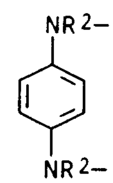

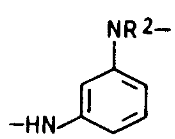 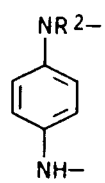 oder 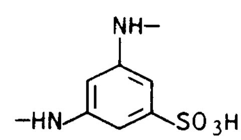

bedeutet, wobei $R^2$ jeweils die in Anspruch 1 genannte Bedeutung besitzt.

3. Reaktivfarbstoffe gemäß Anspruch 1, die der Formel Ia

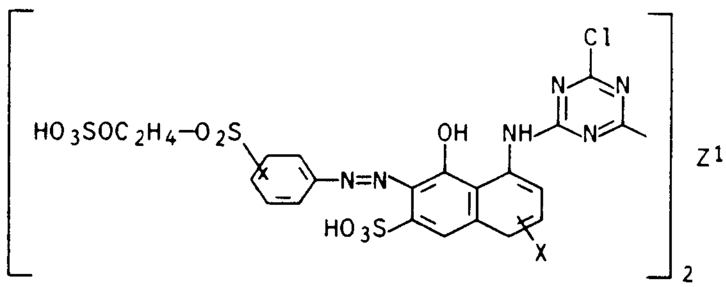

(Ia)

gehorchen, in der

X Wasserstoff oder Hydroxysulfonyl bedeutet und

$Z^1$ die in Anspruch 2 genannte Bedeutung besitzt.

4. Reaktivfarbstoffe gemäß Anspruch 1, die der Formel Ib

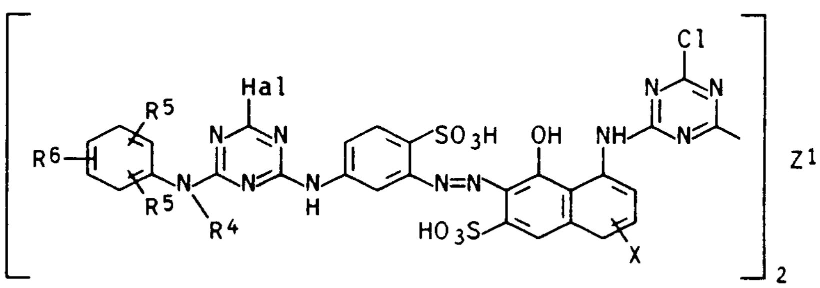

(Ib)

gehorchen, in der

Hal Fluor oder Chlor,

$R^4$ Wasserstoff oder $C_1$-$C_4$-Alkyl,

$R^5$ Wasserstoff, $C_1$-$C_4$-Alkyl oder $C_1$-$C_4$-Alkoxy,

$R^6$ Wasserstoff, $C_1$-$C_4$-Alkyl oder Hydroxysulfonyl und

X Wasserstoff oder Hydroxysulfonyl bedeuten und

$Z^1$ die in Anspruch 2 genannte Bedeutung besitzt.

5. Reaktivfarbstoffe gemäß Anspruch 1, die der Formel Ic

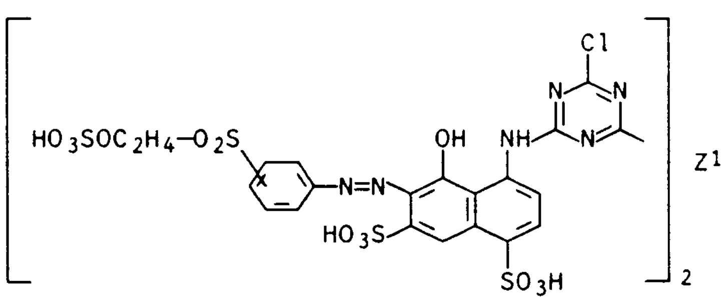

(Ic)

gehorchen, in der

$Z^1$ die in Anspruch 2 genannte Bedeutung besitzt.

6. Reaktivfarbstoffe gemäß Anspruch 1, die der Formel Id

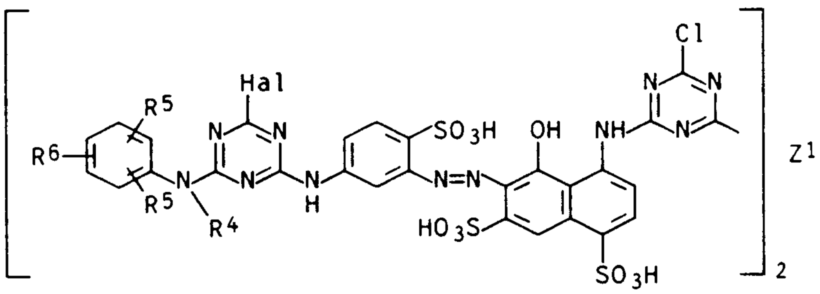

(Id)

gehorchen, in der
Hal Fluor oder Chlor,
$R^4$ Wasserstoff oder $C_1$-$C_4$-Alkyl,
$R^5$ Wasserstoff, $C_1$-$C_4$-Alkyl oder $C_1$-$C_4$-Alkoxy und
$R^6$ Wasserstoff, $C_1$-$C_4$-Alkyl oder Hydroxysulfonyl bedeuten und
$Z^1$ die in Anspruch 2 genannte Bedeutung besitzt.

7. Verwendung der Reaktivfarbstoffe gemäß Anspruch 1 zum Färben oder Bedrucken von Hydroxygruppen oder Stickstoff enthaltenden Substraten.

## Claims

1. A reactive dye of the formula I

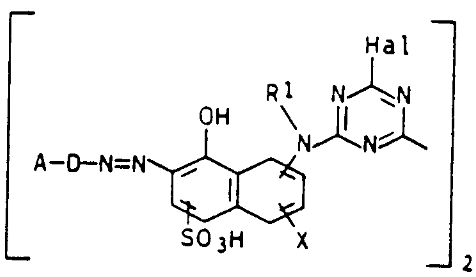

(I)

where
$R^1$ is hydrogen, methyl or ethyl,
X is hydrogen or hydroxysulfonyl,
Hal is fluorine or chlorine,
D is phenylene, carboxyl- or hydroxysulfonyl-monosubstituted or -disubstituted phenylene or hydroxysulfonyl-monosubstituted or -disubstituted naphthylene,
A is a fiber-reactive radical, or A-D combined is a benzo-fused fiber-reactive radical, and
Z is a bridge member of the formula

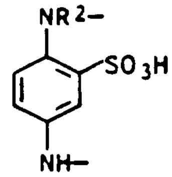 , 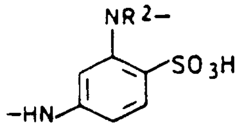 , 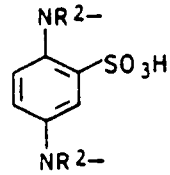 ,

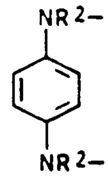 , 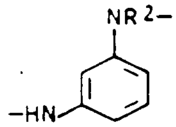 , 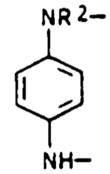 ,

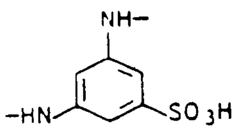 , 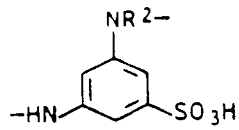 , 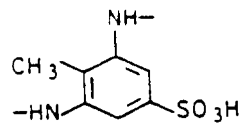 ,

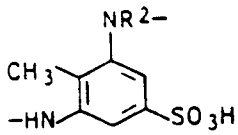 , 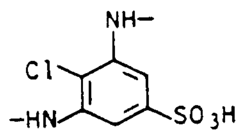 , 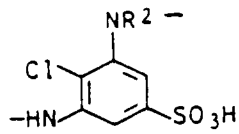 ,

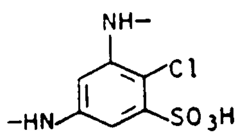 , 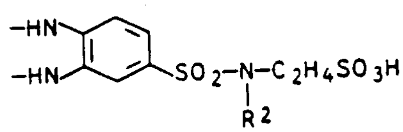 or

$-NR^2-C_3H_6-NR^2-$ ,

where $R^2$ is $C_1$-$C_4$-alkyl.

**2.** A reactive dye as claimed in claim 1, wherein Z conforms to the formula $Z^1$ and is the radical

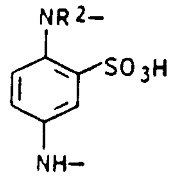

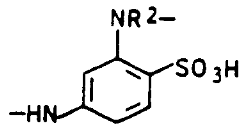

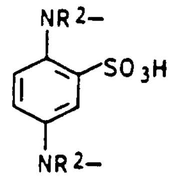

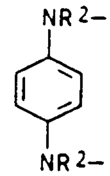

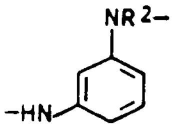

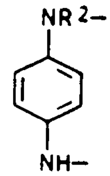

or

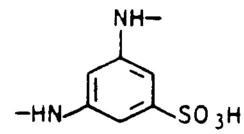

where $R^2$ is in each case as defined in claim 1.

**3.** A reactive dye as claimed in claim 1, conforming to the formula Ia

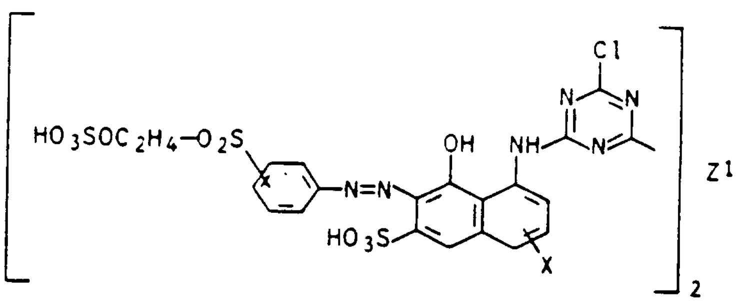

(Ia)

where

X is hydrogen or hydroxysulfonyl and

$Z^1$ is as defined in claim 2.

**4.** A reactive dye as claimed in claim 1, conforming to the formula Ib

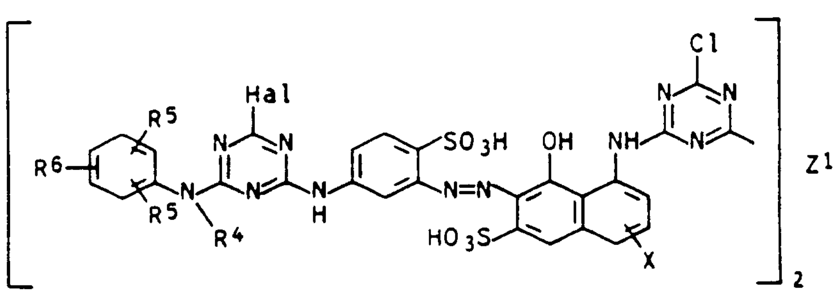

(Ib)

where

Hal is fluorine or chlorine,

$R^4$ is hydrogen or $C_1$-$C_4$-alkyl,

$R^5$ is hydrogen, $C_1$-$C_4$-alkyl or $C_1$-$C_4$-alkoxy,

$R^6$ is hydrogen, $C_1$-$C_4$-alkyl or hydroxysulfonyl,

X is hydrogen or hydroxysulfonyl, and

$Z^1$ is as defined in claim 2.

**5.** A reactive dye as claimed in claim 1, conforming to the formula Ic

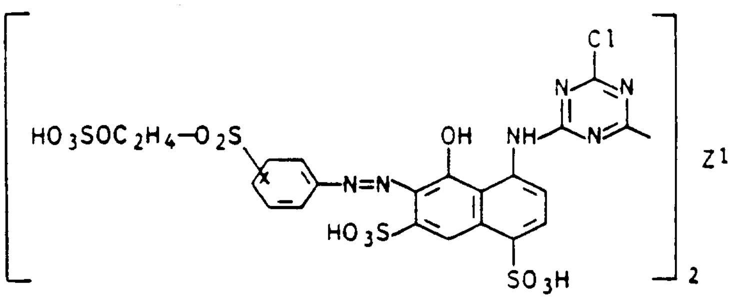

(Ic)

where

$Z^1$ is as defined in claim 2.

**6.** A reactive dye as claimed in claim 1, conforming to the formula Id

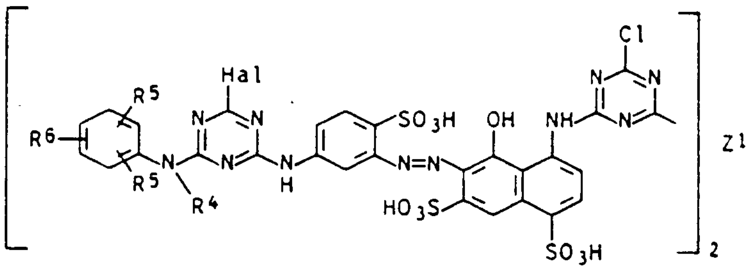

(Id)

where

Hal is fluorine or chlorine,

$R^4$ is hydrogen or $C_1$-$C_4$-alkyl,

$R^5$ is hydrogen, $C_1$-$C_4$-alkyl or $C_1$-$C_4$-alkoxy,

$R^6$ is hydrogen, $C_1$-$C_4$-alkyl or hydroxysulfonyl, and

$Z^1$ is as defined in claim 2.

**7.** The use of a reactive dye as claimed in claim 1 for dyeing or printing hydroxyl- or nitrogen-containing substrates.

## Revendications

**1.** Colorants réactifs de formule I

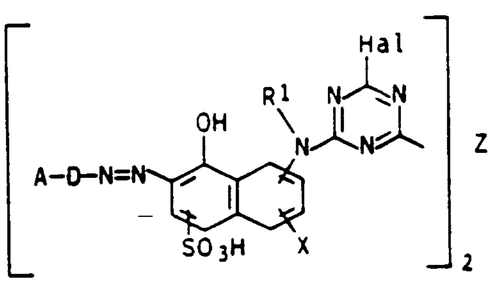

(I),

dans laquelle

$R^1$ représente un atome d'hydrogène au un reste méthyle ou éthyle,

X représente un atome d'hydrogène ou un groupement hydroxysulfonyle,

Hal représente un atome de fluor ou de chlore,

D représente un reste phénylène, phénylène substitué une ou deux fois par des groupements carboxy ou hydroxysulfonyle, ou naphtylène substitué une ou deux fois par des groupements hydroxysulfonyle,

A représente un reste reactif sur les fibres ou le reste A-D représente au total un reste réactif sur les fibres benzocondensé, et

Z représente un maillon de pontage de formule

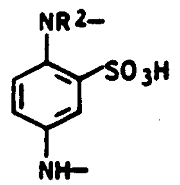 , 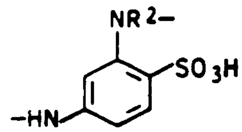 , 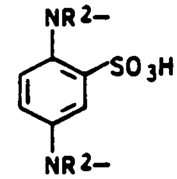 ,

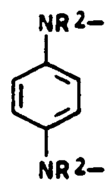 , 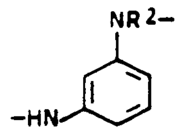 , 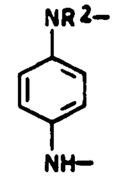 ,

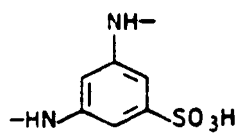 , 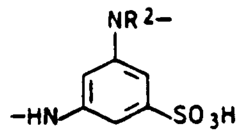 , 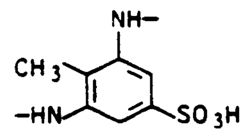 ,

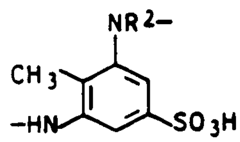 , 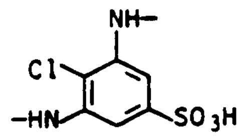 , 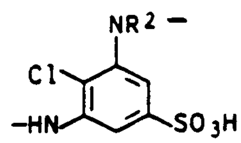 ,

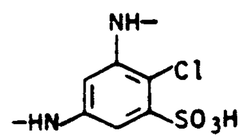 , 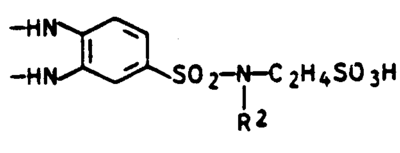 ou

$-NR^2-C_3H_6-NR^2-$,

où $R^2$ est mis pour un radical alkyle en $C_1-C_4$.

**2.** Colorants réactifs selon la revendication 1, caractérisés en ce que Z répond à la formule $Z^1$ et représente le reste

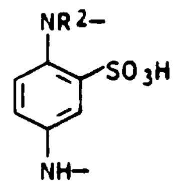

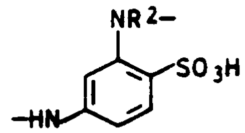

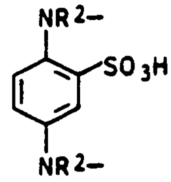

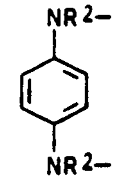

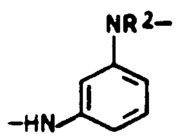

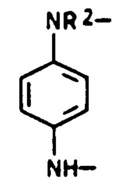

ou

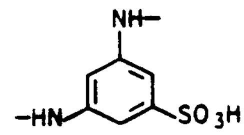

ou $R^2$ a chaque fois la signification donnée dans la revendication 1.

**3.** Colorants reactifs selon la revendication 1 qui répondent à la formule Ia

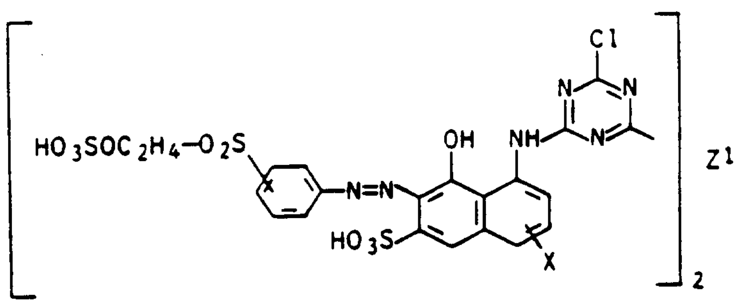

(Ia)

dans laquelle

- X représente un atome d'hydrogène ou un groupement hydroxysulfonyle et
- $Z^1$ a la signification donnée dans la revendication 2.

**4.** Colorants réactifs selon la revendication 1 qui répondent à la formule Ib

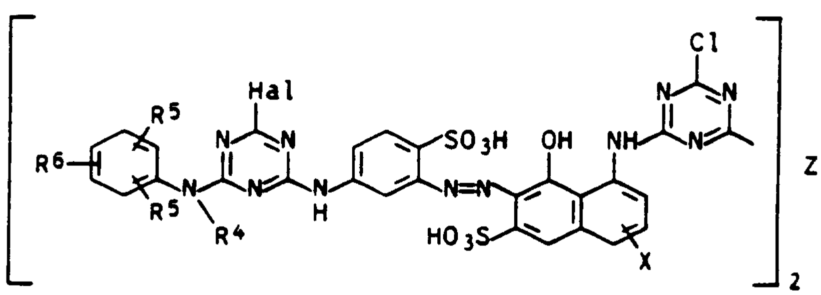

(Ib)

dans laquelle

- Hal représente un atome de fluor ou de chlore,
- $R^4$ représente un atome d'hydrogène ou un reste alkyle en $C_1$-$C_4$,
- $R^5$ représente un atome d'hydrogène ou un reste alkyle en $C_1$-$C_4$ ou alcoxy en $C_1$-$C_4$,
- $R^6$ représente un atome d'hydrogène ou un reste alkyle en $C_1$-$C_4$ ou hydroxysulfonyle,
- X représente un atome d'hydrogène ou un groupement hydroxysulfonyle et
- $Z^1$ a la signification donnée dans la revendication 2.

5. Colorants réactifs selon la revendication 1 qui répondent à la formule Ic

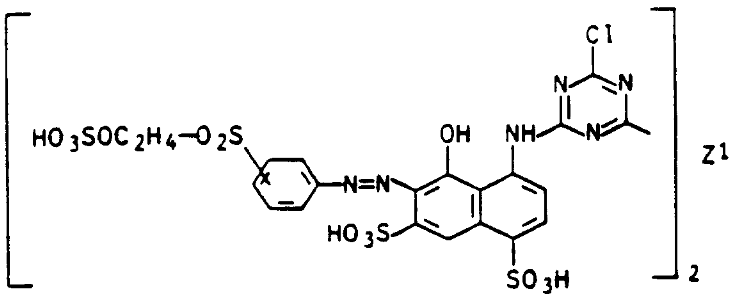

(Ic)

dans laquelle

$Z^1$ a la signification donnée dans la revendication 2.

6. Colorants réactifs selon la revendication 1 qui répondent à la formule Id

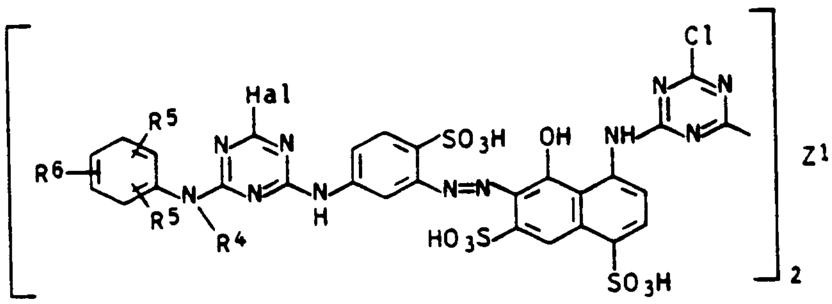

(Id)

dans laquelle

Hal représente un atome de fluor ou de chlore,

$R^4$ représente un atome d'hydrogène ou un reste alkyle en $C_1$-$C_4$,

$R^5$ représente un atome d'hydrogène ou un reste alkyle en $C_1$-$C_4$ ou alcoxy en $C_1$-$C_4$,

$R^6$ représente un atome d'hydrogène ou un reste alkyle en $C_1$-$C_4$ ou hydroxysulfonyle et

$Z^1$ a la signification donnée dans la revendication 2.

7. Utilisation des colorants réactifs selon la revendication 1 pour la teinture ou l'impression de substrats contenant des groupements hydroxy ou des atomes d'azote.